# FASCICULE DE BREVET EUROPEEN

(11) **EP 3 019 031 B1**
(45) Date de publication et mention de la délivrance du brevet: **06.10.2021**
(21) Numéro de dépôt: 14742280.2
(22) Date de dépôt: 25.06.2014
(51) Int. Cl.: A23L 7/10, A23K 40/10, A23K 10/30, A23P 10/20

(54) **PRODUIT ALIMENTAIRE A BASE DE CÉRÉALES DESTINÉ A L'ALIMENTATION HUMAINE OU ANIMALE ET PROCÉDÉ CORRESPONDANT DE FABRICATION**
LEBENSMITTELPRODUKT AUF GETREIDEBASIS FÜR MENSCHLICHEN ODER TIERISCHEN VERZEHR UND ZUGEHÖRIGES HERSTELLUNGSVERFAHREN
GRAIN-BASED FOOD PRODUCT INTENDED FOR HUMAN OR ANIMAL CONSUMPTION AND CORRESPONDING MANUFACTURING METHOD

(30) Priorité: 25.06.2013 FR 1356096
(43) Date de publication de la demande: 18.05.2016
(73) Titulaire: Panzani, 69008 Lyon (FR)
(72) Inventeur: AREKION, Isabelle, Françoise, F-13004 Marseille (FR); NOVET, Nadia, Danièle, Evelyne, F-13013 Marseille (FR)
(74) Mandataire: Weber, Jean-François
(86) Numéro de dépôt international: PCT/FR2014/051599
(87) Numéro de publication internationale: WO 2014/207380

(56) Documents cités:
- WO-A1-98/28988
- FR-A1- 2 920 072
- GB-A- 2 000 426
- GB-A- 2 170 091
- US-A- 2 437 150
- Joseph M. Light: "Modified food starches: why, what, where and how", , 1 novembre 1989 (1989-11-01), XP055081751, Extrait de l'Internet: URL:http://sa.foodinnovation.com/pdfs/modi fied.pdf [extrait le 2013-09-30]
- None

## Description

### DOMAINE TECHNIQUE

La présente invention se rapporte au domaine technique général des produits alimentaires à base de produits céréaliers qui sont d'une part destinés à l'alimentation humaine ou animale et d'autre part à la cuisson dans un liquide, qui est de l'eau chaude ou bouillante, ainsi qu'à leur procédé industriel de fabrication.

La présente invention concerne plus particulièrement un produit alimentaire à base de produits céréaliers qui est destiné à l'alimentation humaine ou animale et à la cuisson dans un liquide, qui est de l'eau chaude ou bouillante.

La présente invention concerne également un procédé de fabrication d'un produit alimentaire à base de produits céréaliers, ledit produit alimentaire étant destiné à l'alimentation humaine ou animale et à la cuisson dans un liquide, qui est de l'eau chaude bouillante.

### TECHNIQUE ANTERIEURE

On connaît déjà différents produits alimentaires à base de produits céréaliers, en particulier à base de riz, qui sont destinés à l'alimentation humaine. De tels produits sont par exemple des grains de riz étuvés qui sont agglomérés entre eux par expansion pour former des doses unitaires ou individualisées de riz expansés.

Les doses de riz expansées sont alors prêtes à être consommées immédiatement et sans cuisson ou opération complémentaire de la part du consommateur.

On connaît par ailleurs les grains de riz dits « *en vrac* » qui sont stockés dans des emballages et qui n'ont subi que des traitements superficiels et mineurs, de type mécanique (décorticage, usinage) ou thermique (étuvage, précuisson) avant leur stockage dans les emballages.

Au sens de l'invention, le produit céréalier alimentaire sera considéré comme étant dans son état « *cru* », lequel état correspond à un produit sec dont l'humidité est inférieure ou égale à 14 % et qui est donc non comestible en l'état et nécessite une hydratation dans l'eau froide, chaude ou bouillante pour les produits dont l'amidon est déjà transformé (riz étuvé, couscous) ou une cuisson strictement dans l'eau bouillante pour rendre l'amidon digestible et hydrater le produit (riz blanc ou pâtes alimentaires).

Les riz « *crus* » de ce type sont parfaitement adaptés à l'alimentation humaine mais doivent subir une cuisson dans un liquide, en général de l'eau chaude ou bouillante, préalablement à leur consommation. Les grains de riz étant tous individualisés, il s'avère que le dosage approprié des quantités de riz à faire cuire est difficile et manque de précision de telle sorte qu'on aboutit généralement à des sur ou sous dosage et rarement à obtenir la dose exacte souhaitée.

On connait également les produits alimentaires surgelés de toutes sortes, y compris des produits céréaliers surgelés, qui peuvent être présentés sous une forme individualisée compacte correspondant à une dose ou portion précise d'aliments. Ces produits ont toutefois déjà subi un traitement de conditionnement ayant modifié les propriétés organoleptiques des aliments qui dès lors ne sont plus dans leur état originel correspondant à l'état « *cru* » défini ci-dessus.

Il est donc apparu qu'il convenait de remédier à ces inconvénients et qu'il existait un besoin non satisfait visant à proposer des produits céréaliers destinés d'une part à l'alimentation humaine ou animale et d'autre part à subir une opération de cuisson qui tout en étant dans leur état « *cru* », c'est-à-dire ayant les propriétés organoleptiques originelles des aliments non modifiées, soient susceptibles d'être conditionnés en portions pour permettre un dosage particulièrement simple et précis.

Le document GB 2 170 091 A décrit une brique de nouilles séchées sur laquelle un mélange sous forme poudreuse ou granulaire d'agents de sapidité, d'épices, d'arômes et d'un agent agglomérant hygroscopique est fixé par humidification et séchage.

Le document WO 98/28988 A1 décrit un aliment, et son procédé de fabrication, constitué de céréales préparées, et prévu pour être consommé avec un liquide, tel que le lait. L'aliment comprend une multitude d'éléments individuels de céréales préparés, agencés pour former une figure de jouet tridimensionnelle et agglomérés avec un liant qui permet de conserver la forme de la figure de jouet tridimensionnelle et qui réagit, lorsqu'on l'expose au liquide, en se dissolvant relativement rapidement et en faisant perdre à la figure de jouet tridimensionnelle, de manière sensiblement immédiate, sa forme agglomérée.

### EXPOSE DE L'INVENTION

Les objets assignés à l'invention visent par conséquent à proposer un nouveau produit alimentaire à base de produits céréaliers destiné à l'alimentation humaine ou animale et également à la cuisson dans un liquide, qui est de l'eau chaude ou bouillante ainsi qu'un procédé correspondant de fabrication, lesdits produits ayant conservés les qualités organoleptiques des produits céréaliers d'origine et étant d'un dosage particulièrement facile à mettre en œuvre par le consommateur.

Un autre objet de l'invention vise à proposer un nouveau produit alimentaire à base de produits céréaliers ainsi que son procédé de fabrication dont la conservation et le stockage sont particulièrement faciles et peuvent s'étendre sur une longue période sans détérioration notable du produit.

Un autre objet de l'invention vise à proposer un nouveau produit alimentaire à base de produits céréaliers ainsi que son procédé de fabrication qui puisse faire l'objet d'un conditionnement au consommateur particulièrement attractif.

Un autre objet de l'invention à proposer un nouveau produit alimentaire à base de produits céréaliers ainsi que son procédé de fabrication qui puisse s'adapter à différents types de céréales ou à différents types et formes de produits céréaliers.

Un autre objet de l'invention vise à proposer un nouveau produit alimentaire à base de produits céréaliers ainsi que son procédé de fabrication qui permet d'obtenir une bonne désagrégation et individualisation du produit alimentaire à base de produits céréaliers lors de la cuisson.

Un autre objet de l'invention vise à proposer un nouveau produit alimentaire à base de produits céréaliers ainsi que son procédé de fabrication qui puisse être obtenu de manière particulièrement économique et à l'aide de moyens techniques classiques.

Les objets assignés à l'invention sont atteints à l'aide d'un produit alimentaire selon la revendication 1.

Les objets assignés à l'invention sont également atteints à l'aide d'un procédé de fabrication selon la revendication 8.

### DESCRIPTIF SOMMAIRE DES DESSINS

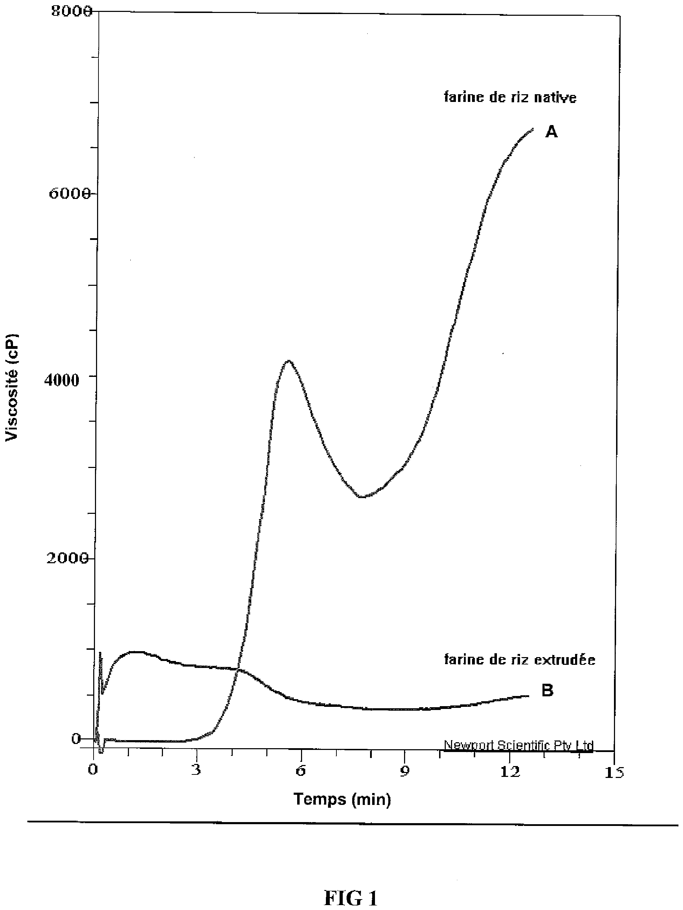

D'autres particularités et avantages de l'invention apparaîtront et ressortiront plus en détails à la lecture de la description faite ci-après, à l'aide des exemples de réalisation donnés uniquement à titre purement illustratif et non limitatif et à l'aide de la figure 1 qui illustre, selon un graphe, le profil de viscosité des farines utilisables pour réaliser et fabriquer les produits alimentaires conformes à l'invention.

### MEILLEURE MANIERE DE REALISER L'INVENTION

L'invention concerne tout d'abord un nouveau produit alimentaire à base de produits céréaliers qui est d'une part destiné à l'alimentation humaine ou animale et qui est d'autre part destiné à la cuisson dans un liquide, qui est de l'eau chaude ou bouillante, avant d'être ingéré par un consommateur.

Au sens de l'invention, on entendra par produit alimentaire à base de produits céréaliers tout produit alimentaire dont le ou les constituant(s) essentiel(s) sont à base de céréales, ce produit étant destiné à la cuisson dans l'eau bouillante. Les produits alimentaires selon l'invention forment donc des produits d'épicerie classique faisant partie du groupe comprenant notamment les pâtes alimentaires de toutes sortes et toutes formes, le riz, les céréales à cuire tel que le blé, qu'il s'agisse de blé dur ou de blé tendre, sans que cette liste puisse être considérée comme étant limitative.

Au sens de l'invention, les produits céréaliers du produit alimentaire conforme à l'invention sont des produits céréaliers « *crus* » tels qu'ils ont été définis précédemment, c'est-à-dire en particulier non comestibles immédiatement à moins de subir une cuisson.

Les produits alimentaires conformes à l'invention sont également destinés à être cuits dans un liquide, et en particulier dans l'eau bouillante et destinés à se désintégrer dans l'eau bouillante de manière sensiblement instantanée, c'est-à-dire que les produits céréaliers vont de manière quasi instantanée être individualisés dans l'eau bouillante et ne pas être agglomérés ou collés entre eux.

Ainsi, le produit alimentaire conforme à l'invention est à base de produits céréaliers et est destiné à l'alimentation humaine ou animale et à la cuisson dans un liquide, par exemple l'eau chaude ou bouillante, et il comprend des produits céréaliers dans leur état cru qui sont agglomérés entre eux par une farine alimentaire dont l'amidon a subi un traitement thermique de gélatinisation de l'amidon de manière à former une dose compacte de produits céréaliers, ladite dose étant prête à la cuisson et apte à se désintégrer rapidement dans le liquide de cuisson.

Les produits céréaliers sont formés par des grains ou graines de céréales entiers (entières) ou concassés (ou encore des brisures) ou formés d'un mélange de grains concassés ou entiers. Selon l'invention, les produits céréaliers sont en particulier formés de riz ou de blé (dur ou tendre). Les produits céréaliers conformes à l'invention peuvent également être des produits de mouture de graines de céréales mis en forme par agglomération puis cuisson et séchage (couscous) ou mis en forme par extrusion, laminage puis séchage (pâtes alimentaires). Les produits céréaliers conformes à l'invention sont ainsi formés par des grains de céréales entiers ou concassés ou formés d'un mélange de grains concassés et entiers ou encore formés par des produits de mouture de graines de céréales.

Ainsi, lorsque les produits céréaliers sont formés par des grains de céréales entiers, la dose compacte de produits céréaliers conforme à l'invention et formant le produit alimentaire est constituée de grains de céréales entiers qui n'ont pas subi de traitement mécanique conduisant à une déformation ou à un concassage de telle sorte qu'ils sont dans leur forme initiale. A l'inverse ils peuvent faire l'objet de traitements mécaniques de concassage conduisant à une brisure des grains de céréales formant ainsi des grains concassés qui constituent la dose compacte La dose compacte peut également être formée à parts égales ou non, par un mélange de grains entiers et concassés.

Selon l'invention, les grains de céréales entiers ou concassés sont choisis dans le groupe formé par : le riz, le maïs, le blé dur, le blé tendre, le froment, l'épeautre, l'orge.

Bien évidemment, l'invention peut s'appliquer à d'autres types de grains de céréales, et même à des grains de blé durs ayant subi une opération mécanique de transformation en semoule pour obtenir du couscous. Le produit alimentaire selon l'invention peut également comprendre un mélange de grains de céréales de différentes espèces et variétés (mélange de blé et maïs par exemple).

Les fragments de produits céréaliers peuvent également être formés par des pâtes alimentaires.

Selon cette variante de l'invention, les pâtes alimentaires peuvent se présenter sous les formes diverses et usuelles connues dans le domaine des pâtes alimentaires et avoir des formes en cônes, en coquille, en coquillage, en tube, de différentes longueurs, creux ou pleins, etc. sans que cette liste puisse être limitative.

La farine alimentaire utilisée a pour fonction de réaliser l'agglomération des fragments de produits céréaliers entre eux de manière à former une dose ou portion compacte de produits céréaliers, ladite dose ou portion étant prête à la cuisson.

Là où les types de farine utilisés doivent donc être à même de générer un effet collant après le traitement thermique de gélatinisation de l'amidon auquel ces farines alimentaires sont soumises.

Ainsi, les farines utilisées pour l'agglomération doivent avoir des propriétés de solubilité parfaite et rapide dans l'eau froide et d'empesage de l'amidon à température ambiante.

La solubilité des farines doit donc être rapide dans l'eau froide.

Par ailleurs, la recherche de l'effet collant de l'amidon de la farine doit, lors de la fabrication, se manifester à température ambiante, et en particulier dans de l'eau froide afin de conduire rapidement et simplement à une bonne agrégation ou agglomération des fragments de produits céréaliers entre eux.

Il a été constaté que les farines natives de produits céréaliers, telles que les farines natives de blé, ou de riz, n'avaient pas la faculté de se dissoudre dans l'eau ni de former d'empois à froid.

C'est la raison pour laquelle il s'est avéré nécessaire que les farines alimentaires utilisées dans l'invention subissent, avant leur mélange avec les produits céréaliers, un traitement thermique préalable afin d'assurer et de réaliser la gélatinisation de l'amidon contenu dans les farines.

Ainsi, selon l'invention, les farines alimentaires qui conviennent pour l'invention peuvent être caractérisées à l'aide d'un appareil de type RVA (Rapid Visco Analyser) qui mesure l'évolution de la viscosité d'une solution eau + farine au cours d'un traitement thermique précisément défini.

Le protocole utilisé pour caractériser ces farines est le suivant :
Une quantité de farine équivalente à 3,08 g de matière sèche (soit 3,5 g pour une farine à 12 % d'humidité) est introduite dans le godet avec agitateur de l'appareil avec 25 g d'eau.
Le profil de température appliqué à la suspension ainsi réalisée est alors le suivant :
   - départ : 50°C et mélange pendant 1 minute à 960 RPM (tours/min) puis réglage de la vitesse de l'agitateur à 160 RPM (tours/min) pendant la durée de l'analyse,
   - montée de la température à 95°C de façon linéaire en 4 minutes 42,
   - maintien de température à 95°C pendant 2 minutes 30,
   - descente à une température de 50°C de façon linéaire en 3 minutes 48,
   - maintien à un palier de température de 50°C pendant 4 minutes.

Les profils de viscosité observés sont ceux illustrés à la figure 1.

On observe ainsi que le profil RVA de la farine de riz B qui convient pour réaliser les produits alimentaires conformes à l'invention est celui obtenu avec la farine de riz B qui, dans le cas présent et particulier, correspond à une farine de riz extrudée ayant subi une gélatinisation de l'amidon.

Une telle farine montre un profil de viscosité sensiblement constant dans le temps et dépourvu de tout pic caractéristique.

En revanche, les farines de riz natives, et par exemple la farine de riz native illustrée à la figure 1 avec le profil A, présentent, lorsqu'elles sont soumises au protocole décrit précédemment, un premier pic de viscosité caractéristique de la gélatinisation de l'amidon contenu dans les farines.

Ceci indique donc que de telles farines n'ont pas subi de gélatinisation de leur amidon et sont par conséquent impropres à être utilisées dans les produits alimentaires conformes à l'invention pour exprimer un effet collant.

De telles farines natives présentent par ailleurs un second profil caractéristique, à savoir, en fin de protocole, une évolution dans le temps très importante de leur viscosité au cours de la période de refroidissement prévue au protocole.

Cette évolution caractéristique de la viscosité correspond à la rétrogradation de l'amidon natif contenu dans les farines de riz natives, phénomène absent dans les farines alimentaires ayant déjà subi une gélatinisation de leur amidon.

Le protocole simple décrit précédemment permet donc de caractériser physiquement les farines alimentaires, de blé, de riz ou plus généralement de toute céréale, qui doivent être utilisées pour obtenir l'effet collant nécessaire à la réalisation de doses compactes de produits céréaliers formant les produits alimentaires conformes à l'invention.

Le produit alimentaire conforme à l'invention comprend avantageusement entre 2 et 5 % de farine, de préférence une farine de riz ou blé, en poids par rapport au produit à agglomérer, c'est-à-dire par rapport au poids de fragments de produits céréaliers à agglomérer.

Avantageusement, le produit alimentaire conforme à l'invention a une humidité inférieure ou égale à 14 %, et de préférence inférieure ou égale à 13%, et de manière encore plus préférentielle comprise entre 11 et 13 %.

Ainsi, le produit final prêt à la cuisson conforme à l'invention est un produit alimentaire à base de produits céréaliers qui forme un galet alimentaire compact et individualisé, c'est-à-dire qu'il présente une forme finie dans l'espace.

De manière préférentielle, il forme un galet cylindrique, étant entendu qu'il peut présenter toute autre forme envisageable et se présenter par exemple sous la forme d'un cube, d'une sphère, d'une pyramide, d'un parallélépipède rectangle ou de toute autre forme spécifique.

Avantageusement, le produit alimentaire conforme à l'invention et correspondant à une dose de céréales prêtes à la cuisson, a un poids compris entre 30 g et 60 g, et de préférence de l'ordre de 40 g avec une humidité de l'ordre de 12 %.

L'invention concerne également un procédé de fabrication d'un produit alimentaire à base de produits céréaliers destiné à l'alimentation humaine ou animale.

Selon l'invention, le procédé de fabrication d'un produit alimentaire à base de produits céréaliers destiné à l'alimentation humaine ou animale et à la cuisson dans un liquide, par exemple dans l'eau chaude ou bouillante, est caractérisé en ce que :
- on mélange des fragments de produits céréaliers dans leur état natif avec une farine alimentaire dont l'amidon a préalablement subi un traitement thermique de gélatinisation de l'amidon pour obtenir un premier mélange,
- on ajoute une quantité ajustée d'eau au premier mélange pour permettre la dissolution et l'empesage de la farine alimentaire et on assure la répartition homogène de la solution autour des fragments de produits céréaliers afin d'obtenir un second mélange,
- on assure la mise en forme du second mélange pour obtenir un produit alimentaire final compact,
- on assure le séchage du produit alimentaire compact.

Ainsi, la première étape de l'invention consiste à mélanger la farine alimentaire avec les fragments de produits céréaliers, qu'il s'agisse par exemple de grains de céréales ou de pâtes alimentaires.

Le mélange peut s'effectuer à l'aide de tout moyen approprié bien connu de l'homme du métier dans des mélangeurs de type classique.

La farine alimentaire utilisée a préalablement subi un traitement thermique de gélatinisation de son amidon selon des procédés et techniques classiques bien connus de l'homme du métier.

La quantité de farine à ajouter est ajustée pour permettre une bonne cohésion entre les différents fragments de produits céréaliers avec un minimum d'eau.

De manière particulièrement avantageuse, la quantité de farine alimentaire à mélanger varie entre 2 et 5 % en poids par rapport aux fragments de produits céréaliers à agglomérer.

La farine est répartie de façon homogène autour de l'ensemble des fragments de produits céréaliers.

L'étape suivante consiste à ajouter une quantité d'eau minimale ou ajustée pour permettre la dissolution de la farine, l'empesage de la farine et une répartition homogène de la solution autour des fragments de produits céréaliers.

Avantageusement, la quantité d'eau ajustée qui est ajoutée au premier mélange varie entre 5 et 10 % par rapport au poids du premier mélange.

Au cours d'une étape supplémentaire, on assure la mise en forme ou le formage des produits alimentaires conformes à l'invention pour constituer une dose compacte de produits céréaliers prête à la cuisson.

Selon une version avantageuse de l'invention, la mise en forme du second mélange est obtenue par une opération de moulage.

Selon cette étape, on assure par exemple la dépose du second mélange dans un moule afin de conférer la forme appropriée à la dose compacte de céréales à fabriquer.

De manière particulièrement avantageuse, à l'issue de la mise en forme, on assure une compression du second mélange pour obtenir un produit compact.

Selon une version avantageuse de l'invention, la mise en forme a pour objectif de fabriquer des galets de forme cylindrique et de poids constant par dépose dans des moules de forme et contenance appropriées, ces galets étant ensuite légèrement compressés pour optimiser la cohésion des fragments de produits céréaliers entre eux.

La dernière étape générale du procédé conforme à l'invention consiste à assurer le séchage du produit alimentaire compact.

Selon une version avantageuse de l'invention, le séchage du produit alimentaire compact est réalisé à l'aide d'un flux d'air chaud.

Cette opération peut être réalisée à l'aide d'un flux d'air qui est soufflé sur le produit alimentaire compact.

De manière alternative, il est possible de faire passer les moules et les produits alimentaires compacts qu'ils contiennent dans une enceinte chauffée sans pour autant sortir du cadre de l'invention.

De manière particulièrement avantageuse, le séchage s'effectue en soumettant les produits compacts à un flux d'air chaud pour amener les produits compacts à une humidité finale comprise entre 11 et 13 %.

Avantageusement, le séchage s'effectue en soumettant les produits compacts à un flux d'air à une température comprise entre 50°C et 90°C, de préférence à environ 60°C, pendant une durée comprise entre 20 et 90 minutes en fonction de la température du flux d'air appliquée.

A l'issue de l'opération de séchage, on procède une stabilisation des produits compacts, par exemple en les soumettant à un flux d'air à une température comprise entre 25 et 35°C pendant une durée comprise entre 30 et 60 minutes.

Les produits alimentaires obtenus, et en particulier lorsque les produits obtenus sont des galets, peuvent être conservés plusieurs années, et par exemple pendant 2 ans à température ambiante dans un endroit sec.

Leur utilisation finale consiste à les plonger dans l'eau bouillante pendant le temps de cuisson préconisé pour les produits correspondants non agglomérés, c'est-à-dire se présentant sous une forme en vrac et n'ayant pas été agglomérés à l'aide d'une farine conforme à l'invention.

Dès leur immersion dans l'eau bouillante, les produits alimentaires conformes à l'invention se désintègrent instantanément, tous les grains (entiers et/ou concassés) ou pâtes étant individualisés et la cuisson pouvant s'opérer ensuite de façon habituelle sans modification par rapport à la cuisson des grains ou pâtes de l'art antérieur.

Aucun résidu dans l'eau de cuisson n'est observé et les qualités organoleptiques des produits conformes à l'invention, c'est-à-dire par exemple leur texture collante, leur présentation ou leur goût, ne sont aucunement modifiées malgré l'adjonction d'une farine permettant leur agglomération.

### Exemples de produits fabriqués selon l'invention :

### Exemple n°1 :

1 kg de riz étuvé Indica est mélangé avec 23 g de farine de riz extrudée.

Le mélange des grains et de la farine de riz est mis en contact avec 60 ml d'eau froide et réparti dans 27 moules cylindriques de 8 cm de diamètre. Chaque galet pèse 40 g et présente une humidité de 17 %.

Les galets sont légèrement comprimés, déposés sur un plateau et introduits dans un séchoir statique. Ils sont soumis pendant 45 minutes à un courant d'air à 60°C puis stabilisés à 35°C pendant 30 minutes. A la sortie du séchoir leur humidité est de 12 %. Ils sont compacts, leur forme est parfaitement cylindrique et stable à température ambiante.

Ces galets plongés dans l'eau bouillante se désintègrent complètement en moins d'une minute.

Après 10 minutes de cuisson, temps préconisé pour ce riz étuvé, les grains sont correctement cuits, leur texture est identique à celle des grains cuits non agglomérés précédemment. Ils sont bien individualisés et non collants.

### Exemple n°2 :

1 kg de pâtes alimentaires de blé dur de forme coquillette est mélangé avec 23 g de farine de riz extrudée.

Le mélange des pâtes et de la farine de riz est mis en contact avec 60 ml d'eau froide et réparti dans 30 moules cylindriques de 8 cm de diamètre. Chaque galet pèse 35 g et présente une humidité de 17 %.

Les galets sont légèrement comprimés, déposés sur un plateau et introduits dans un séchoir statique. Ils sont soumis pendant 45 minutes à un courant d'air à 60°C puis stabilisés à 35°C pendant 30 minutes. A la sortie du séchoir leur humidité est de 12 %. Ils sont compacts, leur forme est parfaitement cylindrique et stable à température ambiante.

Ces galets plongés dans l'eau bouillante se désintègrent complètement au bout d'une minute.

Après 9 min 30 de cuisson, temps préconisé pour ces pâtes, les coquillettes sont correctement cuites, leur texture est identique à celle des pâtes cuites non agglomérées précédemment. Elles sont bien individualisées et non collantes.

### Exemple de produit non issu de l'invention :

1 kg de riz étuvé Indica est mélangé avec 23 g de farine de riz blanc native.

Le mélange des grains et de la farine de riz (non soumise à un traitement de gélatinisation de son amidon) est mis en contact avec 60 ml d'eau froide et réparti dans 27 moules cylindriques de 8 cm de diamètre. Chaque galet pèse 40 g et présente une humidité de 17 %.

Les galets sont légèrement comprimés, déposés sur un plateau et introduits dans un séchoir statique. Ils sont soumis pendant 45 minutes à un courant d'air à 60°C puis stabilisés à 35°C pendant 30 minutes. A la sortie du séchoir leur humidité est de 12 %. Ils sont compacts, leur forme est parfaitement cylindrique et stable à température ambiante.

Ces galets plongés dans l'eau bouillante se désintègrent lentement, de façon progressive.

Après 10 minutes de cuisson, temps préconisé pour ce riz étuvé, les grains ne sont pas cuits de façon homogène, certains grains sont insuffisamment cuits et nécessitent au moins 2 minutes de cuisson en plus pour avoir une bonne cuisson à cœur. En surface de l'eau de cuisson on observe un voile correspondant à la farine.

La cuisson et les qualités organoleptiques des grains ont été modifiées par leur agglomération préalable contrairement aux produits issus de l'invention.

Le procédé de fabrication selon l'invention permet ainsi d'obtenir des doses compactes de produits à base de céréales, qu'il s'agisse de grains de céréales entiers ou concassés ou de pâtes alimentaires qui ont la faculté de se désintégrer instantanément quand on les plonge dans l'eau bouillante, et de conserver les qualités et propriétés organoleptiques de produits comparables commercialisés en vrac, c'est-à-dire non agglomérés.

### POSSIBILITE D'APPLICATION INDUSTRIELLE

L'invention trouve son application industrielle dans la fabrication, la mise en œuvre et l'utilisation de produits alimentaires à base de produits céréaliers.

## Revendications

1. Produit alimentaire à base de produits céréaliers destiné à l'alimentation humaine ou animale et à la cuisson dans un liquide de cuisson, qui est de l'eau chaude ou bouillante, **caractérisé en ce qu'**il comprend des produits céréaliers dans leur état cru, lequel état cru correspond à un produit sec dont l'humidité est inférieure ou égale à 14%, lesdits produits céréaliers nécessitant, avant ingestion par un consommateur, une hydratation dans l'eau chaude ou bouillante pour les produits dont l'amidon est déjà transformé ou une cuisson strictement dans l'eau bouillante pour rendre l'amidon digestible et hydrater le produit,
lesdits produits céréaliers étant formés par des grains de céréales entiers ou concassés ou formés d'un mélange de grains concassés et entiers ou encore formés par des produits de mouture de graines de céréales,
lesdits produits céréaliers étant agglomérés entre eux par une farine alimentaire de céréale dont l'amidon a subi un traitement thermique de gélatinisation de l'amidon, ledit produit alimentaire formant une dose compacte de produits céréaliers prête à la cuisson et apte à se désintégrer instantanément dans le liquide de cuisson.

2. Produit selon la revendication 1 **caractérisé en ce que** son humidité est inférieure ou égale à 14 %, de préférence inférieure ou égale à 13 % et de manière encore plus préférentielle comprise entre 11 et 13 %.

3. Produit selon la revendication 1 ou 2 **caractérisé en ce que** les grains de céréales entiers ou concassés sont choisis dans le groupe formé par : le riz, le maïs, le blé dur, le blé tendre, l'épeautre, l'orge.

4. Produit selon l'une des revendications précédentes **caractérisé en ce qu'**il comprend entre 2 et 5 % de farine en poids, de préférence une farine de riz ou blé.

5. Produit selon l'une des revendications précédentes **caractérisé en ce qu'**il forme un galet alimentaire compact et individualisé.

6. Produit selon l'une des revendications précédentes **caractérisé en ce qu'**il forme un galet cylindrique.

7. Produit selon la revendication 5 ou 6 **caractérisé en ce qu'**il est d'un poids compris entre 30 g et 60 g, et de préférence de l'ordre de 40 g avec une humidité de l'ordre de 12 %.

8. Procédé de fabrication d'un produit alimentaire à base de produits céréaliers destiné à l'alimentation humaine ou animale et à la cuisson dans un liquide, qui est de l'eau chaude ou bouillante, **caractérisé en ce que** :
- on mélange des produits céréaliers dans leur état cru, lequel état cru correspond à un produit sec dont l'humidité est inférieure ou égale à 14%, lesdits produits céréaliers nécessitant, avant ingestion par un consommateur, une hydratation dans l'eau chaude ou bouillante pour les produits dont l'amidon est déjà transformé ou une cuisson strictement dans l'eau bouillante pour rendre l'amidon digestible et hydrater le produit, avec une farine alimentaire de céréale dont l'amidon a préalablement subi un traitement thermique de gélatinisation de l'amidon pour obtenir un premier mélange, lesdits produits céréaliers étant formés par des grains de céréales entiers ou concassés ou formés d'un mélange de grains concassés et entiers ou encore formés par des produits de mouture de graines de céréales,
- on ajoute une quantité ajustée d'eau au premier mélange pour permettre la dissolution et l'empesage de la farine alimentaire de céréale et on assure la répartition homogène de la solution autour des produits céréaliers afin d'obtenir un second mélange,
- on assure la mise en forme du second mélange pour obtenir un produit alimentaire final compact,
- on assure le séchage du produit alimentaire compact.

9. Procédé de fabrication selon la revendication 8 **caractérisé en ce que** la mise en forme du second mélange est obtenue par une opération de moulage.

10. Procédé de fabrication selon la revendication 8 ou 9 **caractérisé en ce qu'**à l'issue de la mise en forme, on assure une compression du second mélange pour obtenir un produit compact.

11. Procédé de fabrication selon l'une des revendications 8 à 10 **caractérisé en ce que** le séchage du produit alimentaire compact est réalisé à l'aide d'un flux d'air chaud.

12. Procédé de fabrication selon la revendication 11 **caractérisé en ce que** le séchage s'effectue en soumettant les produits compacts à un flux d'air chaud pour amener les produits compacts à une humidité finale comprise entre 11 et 13 %.

13. Procédé selon la revendication 12 **caractérisé en ce que** le séchage s'effectue en soumettant les produits compacts à un flux d'air à une température comprise entre 50°C et 90°C, de préférence à environ 60°C, pendant une durée comprise entre 20 et 90 minutes en fonction de la température du flux d'air appliquée.

14. Procédé selon l'une des revendications 8 à 13 **caractérisé en ce qu'**à l'issue de l'opération de séchage, on procède à une stabilisation des produits compacts, par exemple en les soumettant à un flux d'air à une température comprise entre 25 et 35°C pendant une durée comprise entre 30 et 60 minutes.

15. Procédé selon l'une des revendications 8 à 14 **caractérisé en ce que** la quantité de farine alimentaire à mélanger varie entre 2 et 5 % en poids par rapport aux fragments de produits céréaliers à agglomérer.

16. Procédé selon l'une des revendications 8 à 15 **caractérisé en ce que** la quantité d'eau ajustée qui est ajoutée au premier mélange varie entre 5 et 10 % par rapport au poids du premier mélange.

## Patentansprüche

1. Lebensmittelprodukt auf der Basis von Getreideprodukten, welches für den menschlichen oder tierischen Verzehr und zum Kochen in einer Kochflüssigkeit bestimmt ist, die heißes oder kochendes Wasser ist, **dadurch gekennzeichnet, dass** es Getreideprodukte in ihrem Rohzustand umfasst, wobei der Rohzustand einem Trockenprodukt entspricht, dessen Feuchtigkeit kleiner oder gleich 14 % ist, wobei die genannten Getreideprodukte vor dem Verzehr durch einen Verbraucher eine Hydratisierung in heißem oder kochendem Wasser erfordern, für die Produkte, deren Stärke bereits umgewandelt wurde, oder ein Kochen ausschließlich in kochendem Wasser, um die Stärke verdaulich zu machen und das Produkt zu hydratisieren,
wobei die genannten Getreideprodukte aus ganzen oder zerkleinerten Getreidekörnern gebildet sind oder aus einer Mischung von zerkleinerten und ganzen Getreidekörnern gebildet sind oder auch aus Mahlprodukten von Getreidekörnern gebildet sind,
wobei die genannten Getreideprodukte untereinander durch ein Lebensmittelgetreidemehl agglomeriert sind, dessen Stärke einer thermischen Stärkegelatinisierungsbehandlung unterzogen wurde, wobei das genannte Lebensmittelprodukt eine kompakte Dosis von Getreideprodukten bildet, die kochfertig sind und dafür geeignet sind, sich sofort in der Kochflüssigkeit aufzulösen.

2. Produkt nach Anspruch 1, **dadurch gekennzeichnet, dass** seine Feuchtigkeit kleiner oder gleich 14 % ist, vorzugsweise kleiner oder gleich 13 % und noch bevorzugter zwischen 11 und 13 %.

3. Produkt nach Anspruch 1 oder 2, **dadurch gekennzeichnet, dass** die ganzen oder zerkleinerten Getreidekörner ausgewählt sind aus der Gruppe, die gebildet ist aus:
Reis, Mais, Hartweizen, Weichweizen, Dinkel, Gerste.

4. Produkt nach einem der vorhergehenden Ansprüche, **dadurch gekennzeichnet, dass** es zwischen 2 und 5 Gew.-% Mehl, vorzugsweise ein Reis- oder Weizenmehl, umfasst.

5. Produkt nach einem der vorhergehenden Ansprüche, **dadurch gekennzeichnet, dass** es eine kompakte und individualisierte Lebensmittelrolle bildet.

6. Produkt nach einem der vorhergehenden Ansprüche, **dadurch gekennzeichnet, dass** es eine zylindrische Rolle bildet.

7. Produkt nach Anspruch 5 oder 6, **dadurch gekennzeichnet, dass** es ein Gewicht zwischen 30 g und 60 g aufweist, und vorzugsweise in der Größenordnung von 40 g, mit einer Feuchtigkeit in der Größenordnung von 12 %.

8. Verfahren zur Herstellung eines Lebensmittelprodukts auf der Basis von Getreideprodukten, das für den menschlichen oder tierischen Verzehr und zum Kochen in einer Flüssigkeit bestimmt ist, die heißes oder kochendes Wasser ist, **dadurch gekennzeichnet, dass**:
- die Getreideprodukte in ihrem Rohzustand gemischt werden, wobei der Rohzustand einem Trockenprodukt entspricht, dessen Feuchtigkeit kleiner oder gleich 14 % ist, wobei die genannten Getreideprodukte vor dem Verzehr durch einen Verbraucher eine Hydratisierung in heißem oder kochendem Wasser erfordern, für die Produkte, deren Stärke bereits umgewandelt wurde, oder ein Kochen streng in kochendem Wasser, um die Stärke verdaulich zu machen und das Produkt zu hydratisieren, mit einem Lebensmittelgetreidemehl, dessen Stärke zuvor einer thermischen Stärkegelatinisierungsbehandlung unterzogen wurde, um eine erste Mischung zu erhalten, wobei die genannten Getreideprodukte aus ganzen oder zerkleinerten Getreidekörnern gebildet werden oder aus einer Mischung von zerkleinerten und ganzen Getreidekörnern gebildet werden oder auch aus Mahlprodukten von Getreidekörnern gebildet werden,
- eine eingestellte Menge an Wasser der ersten Mischung zugesetzt wird, um das Lösen und Versteifen des Lebensmittelgetreidemehls zu gestatten, und die homogene Verteilung der Lösung um die Getreideprodukte sichergestellt wird, um eine zweite Mischung zu erhalten,
- das Formen der zweiten Mischung sichergestellt wird, um ein kompaktes Lebensmittelendprodukt zu erhalten,
- das Trocknen des kompakten Lebensmittelendprodukts sichergestellt wird.

9. Herstellungsverfahren nach Anspruch 8, **dadurch gekennzeichnet, dass** das Formen der zweiten Mischung durch einen Formvorgang erhalten wird.

10. Herstellungsverfahren nach Anspruch 8 oder 9, **dadurch gekennzeichnet, dass** am Ende des Formens eine Kompression der zweiten Mischung sichergestellt wird, um ein kompaktes Produkt zu erhalten.

11. Herstellungsverfahren nach einem der Ansprüche 8 bis 10, **dadurch gekennzeichnet, dass** das Trocknen des kompakten Lebensmittelprodukts mit Hilfe eines Heißluftstroms durchgeführt wird.

12. Herstellungsverfahren nach Anspruch 11, **dadurch gekennzeichnet, dass** das Trocknen durchgeführt wird, indem die kompakten Produkte einem Heißluftstrom ausgesetzt werden, um die kompakten Produkte auf eine Endfeuchtigkeit zwischen 11 und 13 % zu führen.

13. Verfahren nach Anspruch 12, **dadurch gekennzeichnet, dass** das Trocknen durchgeführt wird, indem die kompakten Produkte einem Luftstrom bei einer Temperatur zwischen 50 °C und 90 °C, vorzugsweise von ungefähr 60 °C, während einer Dauer zwischen 20 und 90 Minuten in Abhängigkeit von der angewendeten Temperatur des Luftstroms ausgesetzt werden.

14. Verfahren nach einem der Ansprüche 8 bis 13, **dadurch gekennzeichnet, dass** am Ende des Trocknungsvorgangs eine Stabilisierung der kompakten Produkte erfolgt, zum Beispiel indem sie einem Luftstrom bei einer Temperatur zwischen 25 und 35°C während einer Dauer zwischen 30 und 60 Minuten ausgesetzt werden.

15. Verfahren nach einem der Ansprüche 8 bis 14, **dadurch gekennzeichnet, dass** die Menge an Lebensmittelmehl, das zu mischen ist, zwischen 2 und 5 Gew.-%, bezogen auf zu agglomerierende Fragmente von Getreideprodukten, variiert.

16. Verfahren nach einem der Ansprüche 8 bis 15, **dadurch gekennzeichnet, dass** die eingestellte Menge an Wasser, die der ersten Mischung zugesetzt wird, zwischen 5 und 10 %, bezogen auf das Gewicht der ersten Mischung, variiert.

## Claims

1. Food product based on cereal products intended for human or animal food and for cooking in a cooking liquid that is hot or boiling water, **characterised in that** it comprises cereal products in the raw state thereof, said raw state corresponding to a dry product the moisture level of which is less than or equal to 14%, said cereal products requiring, before ingestion by a consumer, hydration in hot or boiling water for the products the starch of which is already transformed or cooking strictly in boiling water to make the starch digestible and to hydrate the product,
said cereal products being formed by whole or crushed grains or formed by a mixture of crushed and whole grains or formed by milled cereal-grain products,
said cereal products being agglomerated together by a cereal food flour the starch of which has undergone a heat treatment of gelatinisation of the starch, said food product forming a compact portion of food products ready for cooking and able to disintegrate instantaneously in the cooking liquid.

2. Product according to claim 1, **characterised in that** the moisture level thereof is less than or equal to 14%, preferably less than or equal to 13% and even more preferentially between 11 and 13%.

3. Product according to claim 1 or 2, **characterised in that** the whole or crushed cereal grains are chosen from the group formed by: rice, maize, durum wheat, soft wheat, spelt, barley.

4. Product according to one of the preceding claims, **characterised in that** it comprises between 2 and 5% flour by weight, preferably a rice or wheat flour.

5. Product according to one of the preceding claims, **characterised in that** it forms a compact individualised food roll.

6. Product according to one of the preceding claims, **characterised in that** it forms a cylindrical roll.

7. Product according to claim 5 or 6, **characterised in that** it has a weight of between 30 g and 60 g, and preferably of the order of 40 g, with a moisture level of the order of 12%.

8. Method for manufacturing a food product based on cereal products intended for human or animal food and for cooking in a liquid that is hot or boiling water, **characterised in that**:
- cereal products are mixed in the raw state thereof, said raw state corresponding to a dry product the moisture level of which is less than or equal to 14%, said cereal products requiring, before ingestion by a consumer, hydration in hot or boiling water for the products the starch of which is already transformed or cooking strictly in boiling water to make the starch digestible and to hydrate the product, with a cereal food flour the starch of which has previously undergone heat treatment of gelatinisation of the starch in order to obtain a first mixture, said cereal product being formed by whole or crushed cereal grains or formed by a mixture of crushed and whole grains or formed by milled cereal-grain products,
- an adjusted quantity of water is added to the first mixture to allow the dissolution and starching of the cereal food flour, and the homogeneous distribution of the solution is provided around the cereal products in order to obtain a second mixture,
- the second mixture is shaped to obtain a compact final food product,
- the compact food product is dried.

9. Manufacturing method according to claim 8, **characterised in that** the shaping of the second mixture is obtained by a moulding operation.

10. Manufacturing method according to claim 8 or 9, **characterised in that**, at the end of the shaping, the second mixture is compressed to obtain a compact product.

11. Manufacturing method according to one of claims 8 to 10, **characterised in that** the compact food product is dried by means of a hot-air flow.

12. Manufacturing method according to claim 11, **characterised in that** the drying is effected by subjecting the compact products to a hot-air flow to bring the compact products to a final moisture level of between 11 and 13%.

13. Method according to claim 12, **characterised in that** the drying is effected by subjecting the compact products to a flow of air at a temperature of between 50°C and 90°C, preferably at approximately 60°C, for a period of between 20 and 90 minutes according to the temperature of the air flow applied.

14. Method according to one of claims 8 to 13, **characterised in that**, at the end of the drying operation, stabilisation of the compact products is carried out, for example by subjecting them to a flow of air at a temperature of between 25 and 35°C for a period of between 30 and 60 minutes.

15. Method according to one of claims 8 to 14, **characterised in that** the quantity of food flour to be mixed varies between 2 and 5% by weight with respect to the fragments of cereal products to be agglomerated.

16. Method according to one of claims 8 to 15, **characterised in that** the adjusted quantity of water that is added to the first mixture varies between 5 and 10% with respect to the weight of the first mixture.
